# EUROPÄISCHE PATENTANMELDUNG

(11) **EP 3 641 495 A1**
(43) Veröffentlichungstag der Anmeldung: **22.04.2020**
(21) Anmeldenummer: 19201744.0
(22) Anmeldetag: 07.10.2019
(51) Int. Cl.: H05B 6/06, A47J 27/08

(54) **GARSYSTEM**

(30) Priorität: 18.10.2018 ES 201831014
(71) Anmelder: BSH Hausgeräte GmbH, 81739 München (DE)
(72) Erfinder: Lasobras Bernad, Javier, 50016 Ejea de los Caballeros (Zaragoza) (ES); Llorente Gil, Sergio, 50009 Zaragoza (ES); Mir Bel, Jorge, 50019 Zaragoza (ES); Rivera Peman, Julio, 50410 Cuarte de Huerva (Zaragoza) (ES)

(57) **Zusammenfassung**

Die Erfindung geht aus von einem Garsystem (10a), insbesondere von einem Induktionsgarsystem, mit zumindest einer Sensoreinheit (12a), welche zu einer Detektion zumindest eines Druckparameters vorgesehen ist, der einen Druck innerhalb zumindest eines Lebensmittelaufnahmeraums (16a) zumindest eines Gargeschirrs (14a) kennzeichnet.

Um eine gattungsgemäße Vorrichtung mit verbesserten Eigenschaften hinsichtlich eines Bedienkomforts bereitzustellen, wird vorgeschlagen, dass das Garsystem (10a) zumindest eine Steuereinheit (18a) aufweist, welche dazu vorgesehen ist, in Abhängigkeit von dem Druckparameter zumindest eine Betriebsoperation zumindest eines Garprozesses einzuleiten.

## Beschreibung

Die Erfindung betrifft ein Garsystem nach dem Oberbegriff des Anspruchs 1 und ein Verfahren zu einem Betrieb eines Garsystems nach dem Oberbegriff des Anspruchs 13.

Aus der chinesischen Patentanmeldung CN 105 664 848 A ist bereits ein Garsystem mit einem Garofen und mit einer Sensoreinheit bekannt. Die Sensoreinheit weist einen Drucksensor auf, welcher in einem Betriebszustand einen Druckparameter eines Gargeschirrs detektiert. Das Garsystem weist zudem eine Steuereinheit auf, welche in Abhängigkeit von dem Druckparameter einen Arbeitszustand des Garofens kontrolliert. Die Steuereinheit stellt in Abhängigkeit des Druckparameters und zur Kontrolle des Arbeitszustands fest, ob das Gargeschirr beheizt wird. Eine Einleitung einer Betriebsoperation in Abhängigkeit von dem Druckparameter ist dem genannten chinesischen Dokument des Stands der Technik nicht zu entnehmen.

Die Aufgabe der Erfindung besteht insbesondere darin, eine gattungsgemäße Vorrichtung mit verbesserten Eigenschaften hinsichtlich eines Bedienkomforts bereitzustellen. Die Aufgabe wird erfindungsgemäß durch die Merkmale der Ansprüche 1 und 13 gelöst, während vorteilhafte Ausgestaltungen und Weiterbildungen der Erfindung den Unteransprüchen entnommen werden können.

Die Erfindung geht aus von einem Garsystem, insbesondere von einem Induktionsgarsystem, mit zumindest einer Sensoreinheit, welche zu einer Detektion zumindest eines Druckparameters vorgesehen ist, der einen Druck innerhalb zumindest eines Lebensmittelaufnahmeraums zumindest eines Gargeschirrs kennzeichnet.

Es wird vorgeschlagen, dass das Garsystem zumindest eine Steuereinheit aufweist, welche dazu vorgesehen ist, in Abhängigkeit von dem Druckparameter zumindest eine Betriebsoperation zumindest eines Garprozesses einzuleiten.

Durch die erfindungsgemäße Ausgestaltung kann insbesondere ein besonders hoher Bedienkomfort erreicht werden. Insbesondere kann ein Garen unter Druck, insbesondere in einem als Druckgargeschirr ausgebildeten Gargeschirr, optimiert werden, wodurch insbesondere eine hohe Leistungsfähigkeit und/oder ein hoher Bedienkomfort bereitgestellt werden kann. Es kann insbesondere flexibel auf sich ändernde Druckparameter reagiert werden, wodurch insbesondere eine hohe Sicherheit für einen Bediener ermöglicht und/oder ein Überdruck in dem Gargeschirr gezielt erkannt und/oder verhindert werden kann.

Unter einem "Garsystem" soll insbesondere ein System verstanden werden, welches zumindest ein Gargeräteobjekt und/oder zumindest ein Gargerät und/oder zumindest ein Gargerätezubehörobjekt aufweist, und welches insbesondere zusätzlich zumindest ein Küchenobjekt und/oder zumindest eine weitere Baueinheit aufweisen könnte, das/die insbesondere von einem Gargeräteobjekt und/oder von einem Gargerät und/oder von einem Gargerätezubehörobjekt verschieden ausgebildet ist. Unter einem "Gargeräteobjekt" soll insbesondere zumindest ein Teil, insbesondere eine Unterbaugruppe, eines Gargeräts, insbesondere eines Induktionsgargeräts, verstanden werden. Unter einem "Gargerätezubehörobjekt" soll insbesondere ein Objekt verstanden werden, welches insbesondere zu einem Gebrauch und/oder zu einer Verwendung mit einem Gargerät vorgesehen ist und/oder welches insbesondere als ein Zubehör für ein Gargerät ausgebildet ist. Unter einem "Küchenobjekt" soll insbesondere ein Objekt verstanden werden, welches zu einem Gebrauch und/oder zu einer Verwendung und/oder zu einer Anordnung in einer Küche vorgesehen ist, und zwar insbesondere zu einer Bearbeitung und/oder Behandlung und/oder Aufbewahrung zumindest eines Lebensmittels. Zumindest ein Gargerät könnte beispielsweise ein Backofen und/oder ein Kochfeld und/oder eine Mikrowelle und/oder ein Grillgerät sein.

Beispielsweise könnte das Garsystem zumindest ein Gargeräteobjekt aufweisen, welches insbesondere eine Unterbaugruppe eines Gargeräts sein könnte. Zumindest ein Gargeräteobjekt könnte beispielsweise zumindest eine Steuereinheit und/oder zumindest eine Bedienerschnittstelle und/oder zumindest eine Gargeräte-Gehäuseeinheit und/oder zumindest eine Gargeräte-Heizeinheit und/oder zumindest ein Wechselrichter und/oder zumindest eine Gargeräteplatte, welche insbesondere als Kochfeldplatte ausgebildete Aufstellplatte ausgebildet sein könnte, und/oder zumindest eine Abzugseinheit und/oder zumindest eine Gargeräteelektronik sein. Alternativ oder zusätzlich, insbesondere zu dem Gargeräteobjekt, könnte das Garsystem beispielsweise zumindest ein Gargerät und insbesondere zusätzlich zu dem Gargerät zumindest eine weitere Baueinheit aufweisen, wie insbesondere zumindest eine Gargeräteplatte, welche insbesondere als Arbeitsplatte ausgebildete Aufstellplatte ausgebildet sein könnte.

Beispielsweise könnte zumindest ein Gargerätezubehörobjekt eine weitere Sensoreinheit zur externen Messung einer Temperatur eines Gargeschirrs und/oder eines Garguts sein.

Zumindest ein Gargerätezubehörobjekt könnte beispielsweise alternativ oder zusätzlich ein Gargeschirr und/oder eine Aufstelleinheit und/oder ein Kontaktmodul sein, welches insbesondere zu einer Anordnung an dem Gargeschirr und/oder an der Aufstelleinheit vorgesehen sein könnte. Insbesondere könnte zumindest ein Gargerätezubehörobjekt alternativ oder zusätzlich ein Adapter sein, welcher insbesondere zu einer Kopplung mit zumindest einem Küchenobjekt und insbesondere zu einem Aufstellen und/oder Auflegen auf der Gargeräteplatte vorgesehen sein könnte.

Zumindest ein Küchenobjekt könnte beispielsweise eine Küchenmaschine und/oder eine Unterbaugruppe einer Küchenmaschine, insbesondere ein Küchenmaschinenbehälter, sein. Alternativ oder zusätzlich könnte zumindest ein Küchenobjekt ein Reinigungsgerät und/oder ein Kältegerät sein. Zumindest eine weitere Baueinheit könnte beispielsweise ein Mobilgerät und/oder eine Recheneinheit, wie beispielsweise ein Computer, sein.

Unter einer "Sensoreinheit" soll insbesondere eine Einheit verstanden werden, welche zumindest einen Detektor zu einer Detektion wenigstens einer Sensorkenngröße aufweist und welche insbesondere dazu vorgesehen ist, einen die Sensorkenngröße kennzeichnenden Wert auszugeben, wobei es sich bei der Sensorkenngröße vorteilhaft um eine physikalische und/oder chemische Größe handelt. Beispielsweise könnte die Sensoreinheit die Sensorkenngröße in wenigstens einem Betriebszustand aktiv detektieren, wie insbesondere durch Erzeugen und Aussenden eines Messsignals, insbesondere eines elektrischen und/oder optischen Messsignals. Alternativ oder zusätzlich könnte die Sensoreinheit die Sensorkenngröße in wenigstens einem Betriebszustand passiv detektieren, wie insbesondere durch eine Erfassung von zumindest einer Eigenschaftsänderung zumindest eines Sensorbauteils und/oder des Detektors.

Zumindest ein Detektor der Sensoreinheit ist insbesondere ein Drucksensor. Insbesondere detektiert die Sensoreinheit, insbesondere mittels des Drucksensors, in wenigstens einem Betriebszustand einen Druck innerhalb zumindest eines Lebensmittelaufnahmeraums zumindest eines Gargeschirrs.

Besonders vorteilhaft weist die Sensoreinheit zumindest eine Kommunikationseinheit auf, welche insbesondere zu einer Kommunikation mit der Steuereinheit und/oder zu einer Ausgabe an zumindest einen Bediener, insbesondere mittels zumindest einer Bedienerschnittstelle, vorgesehen ist. Beispielsweise könnte die Sensoreinheit zumindest eine Sensorleiterplatine weisen, an welcher insbesondere die Kommunikationseinheit angeordnet sein könnte. Die Kommunikationseinheit könnte beispielsweise zu einer Kommunikation mittels zumindest eines Funksignals, welches beispielsweise speziell für kurze Strecken von maximal 10 m ausgelegt sein könnte, und/oder mittels elektromagnetischer Wellen und/oder mittels Lichtwellen vorgesehen sein.

Das Garsystem weist insbesondere zumindest ein Gargeschirr, insbesondere das Gargeschirr, auf. Das Gargeschirr ist vorzugsweise als ein Druckgargeschirr, insbesondere als ein Druckkochtopf, ausgebildet. Insbesondere weist das Gargeschirr zumindest einen Lebensmittelaufnahmeraum auf, welcher insbesondere zu einer Aufnahme zumindest eines Lebensmittels, insbesondere eines Fluids und/oder eines Feststoffs, vorgesehen ist. Insbesondere weist das Gargeschirr zumindest eine Wandung auf, welche insbesondere den Lebensmittelaufnahmeraum wenigstens teilweise definiert und/oder begrenzt. Zumindest eine Wandung des Gargeschirrs könnte beispielsweise eine Innenwandung und/oder eine Außenwandung und/oder ein Gargeschirrdeckel und/oder ein Gargeschirrgriff sein. Insbesondere begrenzen und/oder definieren Wandungen des Gargeschirrs, insbesondere ein Gargeschirrdeckel und ein Gargeschirrgrundkörper, den Lebensmittelaufnahmeraum in wenigstens einem Betriebszustand wenigstens zu einem Großteil und vorteilhaft vollständig.

Unter einem "Betriebszustand" soll insbesondere ein Zustand verstanden werden, in welchem insbesondere eine Gargeräteheizeinheit dem Gargeschirr Energie, insbesondere Heizenergie, zuführt und in welchem insbesondere der Lebensmittelaufnahmeraum wenigstens im Wesentlichen verschlossen und/oder wenigstens im Wesentlichen vollständig definiert ist. Unter der Wendung, dass der Lebensmittelaufnahmeraum "wenigstens im Wesentlichen verschlossen" und/oder "wenigstens im Wesentlichen vollständig definiert" ist, soll insbesondere verstanden werden, dass der Lebensmittelaufnahmeraum unter Berücksichtigung und/oder Zulassung von Fertigungstoleranzen und/oder Dichtungstoleranzen vollständig verschlossen und/oder vollständig definiert ist.

Hier und im Folgenden wird insbesondere ein Betriebszustand immer mit einem unbestimmten Artikel versehen, da es sich insbesondere um verschiedene Betriebszustände, beispielsweise im Fall von verschiedenen Betriebsmodi handeln könnte. Hierdurch soll jedoch keinesfalls ausgeschlossen werden, dass es sich um den gleichen Betriebszustand handelt.

Unter einer "Gargeräteheizeinheit" soll insbesondere eine Heizeinheit eines Gargeräts verstanden werden. Unter einer "Heizeinheit" soll in diesem Zusammenhang insbesondere eine Einheit verstanden werden, welche dazu vorgesehen ist, in wenigstens einem Betriebszustand zumindest einem Gargeschirr Energie zum Zweck einer Beheizung des Gargeschirrs zuzuführen. Beispielsweise könnte die Heizeinheit als Widerstandsheizeinheit ausgebildet sein und insbesondere dazu vorgesehen sein, Energie in Wärme umzuwandeln und diese dem Gargeschirr zum Zweck einer Beheizung des Gargeschirrs zuzuführen. Alternativ oder zusätzlich könnte die Heizeinheit als Induktionsheizeinheit ausgebildet sein und insbesondere dazu vorgesehen sein, Energie in Form eines elektromagnetischen Wechselfelds dem Gargeschirr zuzuführen, wobei die dem Gargeschirr zugeführte Energie insbesondere in dem Gargeschirr in Wärme umgewandelt werden könnte.

Insbesondere ist die Sensoreinheit zu einer, insbesondere werkzeuglos lösbaren Anordnung an zumindest einem Gargeschirr, insbesondere an dem Gargeschirr, vorgesehen. Unter der Wendung, dass die Sensoreinheit zu einer Anordnung "an" zumindest einem Gargeschirr vorgesehen ist, soll insbesondere verstanden werden, dass die Sensoreinheit in wenigstens einem Betriebszustand innerhalb des Lebensmittelaufnahmeraums des Gargeschirrs und/oder außerhalb des Lebensmittelaufnahmeraums des Gargeschirrs und/oder in Kontakt mit einer Wandung des Gargeschirrs und/oder wenigstens teilweise in einer Wandung des Gargeschirrs integriert angeordnet ist.

Der Druckparameter könnte beispielsweise der Druck innerhalb des Lebensmittelaufnahmeraums selbst sein. Alternativ oder zusätzlich könnte der Druckparameter beispielsweise ein Parameter sein, welcher von dem Druck innerhalb des Lebensmittelaufnahmeraums und insbesondere durch zumindest eine mathematische Operation in den Temperatur innerhalb des Lebensmittelaufnahmeraums umrechenbar ist.

Unter einer "Steuereinheit" soll insbesondere eine elektronische Einheit verstanden werden, welche in wenigstens einem Betriebszustand zumindest eine Gargerätefunktion und/oder zumindest eine Gargerätehauptfunktion, insbesondere eine Beheizung zumindest eines Gargeschirrs, steuert und/oder regelt. Die Steuereinheit weist insbesondere zumindest eine Recheneinheit und insbesondere zusätzlich zu der Recheneinheit zumindest eine Speichereinheit auf, in welcher insbesondere zumindest ein Steuer- und/oder Regelprogramm gespeichert ist, das insbesondere zu einer Ausführung durch die Recheneinheit vorgesehen ist. Insbesondere ist die Steuereinheit dazu vorgesehen, zumindest ein von der Steuereinheit verschiedenes, insbesondere elektrisches und/oder elektronisches Gargeräteobjekt zu steuern und/oder zu regeln.

Unter der Wendung, dass die Steuereinheit dazu vorgesehen ist in Abhängigkeit von dem Druckparameter zumindest eine Betriebsoperation zumindest eines Garprozesses "einzuleiten", soll insbesondere verstanden werden, dass die Steuereinheit in wenigstens einem Betriebszustand in Abhängigkeit von dem Druckparameter die Betriebsoperation ausführt und/oder zumindest einen Befehl an zumindest eine weitere Einheit ausgibt, welche anschließend insbesondere die Betriebsoperation ausführt. Die Steuereinheit leitet in dem Betriebszustand zumindest eine Betriebsoperation insbesondere im Fall einer Abweichung des Druckparameters von zumindest einem Druckreferenzbereich ein. Beispielsweise könnte die Steuereinheit in wenigstens einem Betriebszustand zumindest eine Betriebsoperation im Fall eines Druckparameters einleiten, welcher einen Wert innerhalb von zumindest einem Druckreferenzbereichs annehmen könnte. Die Steuereinheit könnte beispielsweise in wenigstens einem, insbesondere von dem Betriebszustand verschiedenen weiteren Betriebszustand in Abhängigkeit von dem Druckparameter den Garprozess wenigstens im Wesentlichen und vorteilhaft vollständig unverändert weiterführen.

Unter einer "Betriebsoperation" soll insbesondere eine Aktion verstanden werden, welche die Steuereinheit in wenigstens einem Betriebszustand ausführt, und zwar insbesondere zum Zweck einer Beheizung des Gargeschirrs und/oder zum Zweck einer Information eines Bedieners und/oder zum Zweck einer Vermeidung zumindest einer Gefahrensituation und/oder zum Zweck einer Erkennung und/oder Behebung zumindest einer Fehlfunktion. Zumindest eine Gefahrensituation könnte beispielsweise ein Überkochen und/oder ein Leerkochen des Gargeschirrs und/oder eine Überhitzung, insbesondere des Gargeschirrs und/oder zumindest einer Gargeräteheizeinheit sein. Zumindest eine Fehlfunktion könnte beispielsweise zumindest eine Fehlplatzierung des Gargeschirrs und/oder zumindest eine Undichtigkeit des Gargeschirrs und/oder zumindest eine Fehlplatzierung eines Gargeschirrdeckels relativ zu zumindest einem Gargeschirrgrundkörper sein.

Beispielsweise könnte die Steuereinheit in wenigstens einem Betriebszustand eine dem Gargeschirr zugeführte Heizleistung in Abhängigkeit von dem Druckparameter regeln.

Alternativ oder zusätzlich könnte die Steuereinheit in wenigstens einem Betriebszustand in Abhängigkeit von dem Druckparameter zumindest einen Aktivitätszustand zumindest einer das Gargeschirr beheizenden Gargeräteheizeinheit regeln. Die Steuereinheit könnte alternativ oder zusätzlich beispielsweise in Abhängigkeit von dem Druckparameter zumindest eine Ausgabe über zumindest eine Bedienerschnittstelle regeln und insbesondere zumindest eine Information und/oder zumindest eine Warnung an einem Bediener mittels der Bedienerschnittstelle ausgeben.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass die Steuereinheit in wenigstens einem Betriebszustand in Abhängigkeit von dem Druckparameter ein Erreichen eines Maximaldrucks innerhalb des Lebensmittelaufnahmeraums erkennt und bei Erreichen insbesondere des Maximaldrucks zumindest eine Sicherheitsaktion einleitet. Insbesondere vergleicht die Steuereinheit in wenigstens einem Betriebszustand den Druckparameter mit zumindest einem Druckreferenzbereich und erkennt insbesondere in wenigstens einem Betriebszustand durch Vergleich des Druckparameters mit dem Druckreferenzbereich ein Erreichen eines Maximaldrucks innerhalb des Lebensmittelaufnahmeraums. Beispielsweise könnte zumindest ein Druckreferenzbereich und/oder der Maximaldruck in der Speichereinheit der Steuereinheit gespeichert sein. Alternativ oder zusätzlich könnte die Steuereinheit zumindest einen Druckreferenzbereich und/oder den Maximaldruck von zumindest einer weiteren Einheit empfangen und/oder anfordern. Zumindest eine weitere Einheit könnte beispielsweise ein Netzwerk sein, wie beispielsweise das Internet und/oder ein Haushaltsnetzwerk. Zumindest eine weitere Einheit könnte beispielsweise eine Bedieneingabe mittels zumindest einer Bedienerschnittstelle und vorteilhaft mittels zumindest einer Gargerätebedienerschnittstelle sein. Zumindest eine Sicherheitsaktion könnte insbesondere eine Ausgabe zumindest einer Information an einen Bediener, beispielsweise mittels zumindest einer Bedienerschnittstelle und vorteilhaft mittels zumindest einer Gargerätebedienerschnittstelle, sein. Zumindest eine Sicherheitsaktion könnte insbesondere ein Abschalten zumindest einer, insbesondere das Gargeschirr beheizenden Gargeräteheizeinheit sein. Dadurch kann insbesondere eine besonders hohe Sicherheit für einen Bediener bereitgestellt werden, wodurch insbesondere ein hoher Bedienkomfort und/oder eine geringe Gefahr einer Verletzung des Bedieners ermöglicht werden kann.

Zudem wird vorgeschlagen, dass die Steuereinheit in wenigstens einem Betriebszustand in Abhängigkeit von dem Druckparameter zumindest einen Dichtungsparameter des Gargeschirrs überprüft und im Fall einer Abweichung des Dichtungsparameters von einem Dichtungsreferenzbereich zumindest eine Sicherheitsaktion einleitet. Insbesondere vergleicht die Steuereinheit in wenigstens einem Betriebszustand den Dichtungsparameter mit zumindest einem Dichtungsreferenzbereich und erkennt insbesondere in wenigstens einem Betriebszustand durch Vergleich des Dichtungsparameters mit dem Dichtungsreferenzbereich einen unerwarteten Verlauf des Dichtungsparameters und/oder eine Undichtigkeit und/oder eine Leckstelle. Beispielsweise könnte die Steuereinheit eine Abweichung des Dichtungsparameters von einem Dichtungsreferenzbereich anhand eines zu langsamen Ansteigens eines Drucks in dem Lebensmittelaufnahmeraum und/oder anhand eines plötzlichen Abfallens des Drucks in dem Lebensmittelaufnahmeraum erkennen. In wenigstens einem Betriebszustand leitet die Steuereinheit insbesondere im Fall einer Abweichung des Dichtungsparameters von einem Dichtungsreferenzbereich zumindest eine Sicherheitsaktion ein. Beispielsweise könnte zumindest ein Dichtungsreferenzbereich in der Speichereinheit der Steuereinheit gespeichert sein. Alternativ oder zusätzlich könnte die Steuereinheit zumindest einen Dichtungsreferenzbereich von zumindest einer weiteren Einheit empfangen und/oder anfordern. Zumindest ein Dichtungsparameter könnte beispielsweise eine Anordnung zumindest eines Gargeschirrdeckels des Gargeschirrs relativ zu zumindest einem Gargeschirrgrundkörper, welcher insbesondere den Lebensmittelaufnahmeraum wenigstens zu einem Großteil definieren könnte, des Gargeschirrs und/oder zumindest ein Leck in zumindest einer Dichtung sein. Dadurch kann insbesondere eine energiesparende Ausgestaltung erzielt werden, da insbesondere im Fall einer Undichtigkeit entsprechend und zeitnah reagiert werden kann, wodurch eine unnötige und/oder ineffiziente Beheizung des Gargeschirrs vermieden werden kann.

In wenigstens einem Betriebszustand könnte die Steuereinheit insbesondere im Fall eines Druckparameters, welcher einen Wert innerhalb zumindest eines in dem Garprozess vorgegebenen Druckreferenzbereichs annimmt, eine Beheizung des Gargeschirrs unverändert fortführen und/oder eine zu einer Beheizung des Gargeschirrs bereitgestellte Heizleistung wenigstens im Wesentlichen und vorteilhaft vollständig konstant halten. Vorzugsweise wird vorgeschlagen, dass die Steuereinheit in wenigstens einem Betriebszustand im Fall eines Druckparameters, welcher einen Wert innerhalb zumindest eines in dem Garprozess vorgegebenen Druckreferenzbereichs annimmt, zumindest eine zu einer Beheizung des Gargeschirrs bereitgestellte Heizleistung automatisch zumindest reduziert. Zumindest ein Druckreferenzbereich könnte beispielsweise individuell für den Garprozess und insbesondere für jeden Garprozess vorgegeben sein. Beispielsweise könnte zumindest ein Druckreferenzbereich durch zumindest eine Bedieneingabe mittels zumindest einer Bedienerschnittstelle und vorteilhaft mittels zumindest einer Gargerätebedienerschnittstelle vorgegeben sein. Alternativ oder zusätzlich könnte zumindest ein Druckreferenzbereich werkstechnisch vorgegeben und insbesondere in der Speichereinheit der Steuereinheit gespeichert sein. Unter einer "Heizleistung" soll insbesondere eine Heizleistungsstufe und/oder eine Heizleistungsdichte verstanden werden. Unter "automatisch" soll insbesondere selbsttätig und/oder unter Vermeidung einer Einwirkung durch einen Bediener und/oder unter Vermeidung einer Bedieneingabe mittels zumindest einer Bedienerschnittstelle und vorteilhaft mittels zumindest einer Gargerätebedienerschnittstelle verstanden werden. Unter der Wendung, dass die Steuereinheit im Fall eines Druckparameters, welcher einen Wert innerhalb zumindest eines in dem Garprozess vorgegebenen Druckreferenzbereichs annimmt, eine Heizleistung automatisch "zumindest reduziert", soll insbesondere verstanden werden, dass die Steuereinheit die Heizleistung ausgehend von einem aktuellen Wert der Heizleistung auf einen Wert größer als Null reduziert und/oder dass die Steuereinheit die Heizleistung ausgehend von einem aktuellen Wert der Heizleistung auf einen Wert von Null reduziert und damit die Gargeräteheizeinheit deaktiviert. Unter einem "aktuellen" Wert der Heizleistung soll insbesondere ein Wert der Heizleistung verstanden werden, welchen die Heizleistung zeitlich betrachtet zu einem gegebenen Zeitpunkt annimmt und/oder welchen die Heizleistung kurz vor einer Reduktion des Werts der Heizleistung annimmt. Dadurch kann insbesondere eine umweltschonende und/oder energiesparende Ausgestaltung erzielt werden.

Beispielsweise könnte die Steuereinheit in wenigstens einem Betriebszustand den Druckparameter ausschließlich zu einer internen Berechnung heranziehen, insbesondere verwenden, und insbesondere auf eine Ausgabe zumindest einer den Druckparameter kennzeichnenden Kenngröße verzichten. Vorzugsweise weist das Garsystem zumindest eine Bedienerschnittstelle, insbesondere zumindest eine Gargerätebedienerschnittstelle, auf, über welche die Steuereinheit in wenigstens einem Betriebszustand zumindest eine den Druckparameter kennzeichnende Kenngröße ausgibt, um insbesondere einem Bediener eine Information auszugeben, wann und/oder zu welchem Zeitpunkt und/oder ob ein Gargeschirrdeckel des Gargeschirrs geöffnet werden kann. Beispielsweise könnte die Bedienerschnittstelle wenigstens teilweise als eine Mobilgeräte-Bedienerschnittstelle ausgebildet sein. Die Bedienerschnittstelle ist insbesondere wenigstens teilweise als eine Gargeräte-Bedienerschnittstelle ausgebildet. Insbesondere ist die Bedienerschnittstelle von einem mechanischen Druckregler und/oder von einem Ventil verschieden ausgebildet. Unter einer "Bedienerschnittstelle" soll insbesondere eine Einheit verstanden werden, welche eine Schnittstelle zwischen der Steuereinheit und einem Bediener definiert und welche insbesondere zu einer Kommunikation zwischen der Steuereinheit und dem Bediener vorgesehen ist. Insbesondere ist die Bedienerschnittstelle zu einer Eingabe und/oder Auswahl von Betriebsparametern vorgesehen, beispielsweise einer Heizleistung und/oder einer Heizleistungsdichte und/oder einer Heizzone. Die Bedienerschnittstelle ist insbesondere zu einer, beispielsweise akustischen und/oder haptischen und/oder vorzugsweise optischen Ausgabe eines Werts eines Betriebsparameters an einen Bediener und/oder der den Druckparameter kennzeichnenden Kenngröße vorgesehen. Die Bedienerschnittstelle weist insbesondere zumindest ein Display und/oder zumindest eine Flüssigkeitskristallanzeige zu einer Ausgabe eines Werts eines Betriebsparameters an einen Bediener und/oder der den Druckparameter kennzeichnenden Kenngröße auf. Zumindest eine den Druckparameter kennzeichnende Kenngröße könnte beispielsweise zumindest ein Druck innerhalb des Lebensmittelaufnahmeraums sein. Insbesondere könnte zumindest eine den Druckparameter kennzeichnende Kenngröße eine Information sein ob und/oder wann ein Gargeschirrdeckel geöffnet werden kann, und/oder eine Freigabe zu einer Öffnung eines Gargeschirrdeckels sein. Dadurch kann insbesondere ein hoher Grad an Information für einen Bediener bereitgestellt werden, wodurch insbesondere eine hohe Sicherheit und/oder ein hoher Bedienkomfort erzielt werden kann.

Die Sensoreinheit ist vorteilhaft dazu vorgesehen, in wenigstens einem Betriebszustand wenigstens zu einem Großteil innerhalb des Gargeschirrs angeordnet zu sein. Vorzugsweise ist die Sensoreinheit in wenigstens einem Betriebszustand wenigstens zu einem Großteil und vorteilhaft vollständig innerhalb des Gargeschirrs, insbesondere innerhalb des Lebensmittelaufnahmeraums und/oder an dem Gargeschirrdeckel und/oder an dem Garschirrgrundkörper, angeordnet. Dadurch kann insbesondere zumindest ein Druckparameter in optimaler Art und Weise detektiert werden, wodurch insbesondere optimale Garergebnisse und/oder ein hoher Bedienkomfort ermöglicht werden können.

Die Sensoreinheit könnte beispielsweise zumindest einen Detektor aufweisen, welcher insbesondere in wenigstens einem Betriebszustand in fluidtechnischem Kontakt mit einem in dem Lebensmittelaufnahmeraum befindlichem Fluid stehen könnte. Alternativ oder zusätzlich könnte die Sensoreinheit zumindest einen Detektor aufweisen, welcher in wenigstens einem Betriebszustand wenigstens zu einem Großteil und vorteilhaft vollständig außerhalb des Gargeschirrs, insbesondere außerhalb des Lebensmittelaufnahmeraums, angeordnet sein könnte. Die Sensoreinheit könnte beispielsweise zumindest einen Detektor aufweisen, welcher insbesondere an dem Gargeschirrdeckel und/oder an dem Garschirrgrundkörper angeordnet sein könnte. Vorzugsweise weist die Sensoreinheit zumindest einen Detektor und zumindest eine Abschirmeinheit auf, die in wenigstens einem Betriebszustand den Detektor gegenüber in dem Lebensmittelaufnahmeraum befindlichem Fluid wenigstens im Wesentlichen und vorteilhaft vollständig abschirmt. Insbesondere schirmt die Abschirmeinheit unabhängig von einer Anordnung des Detektors an dem Gargeschirr und/oder innerhalb des Gargeschirrs und/oder relativ zu dem Gargeschirr in wenigstens einem Betriebszustand den Detektor gegenüber in dem Lebensmittelaufnahmeraum befindlichem Fluid wenigstens im Wesentlichen und vorteilhaft vollständig ab. In wenigstens einem Betriebszustand ist die Abschirmeinheit insbesondere wenigstens teilweise zwischen dem Detektor und in dem Lebensmittelaufnahmeraum befindlichem Fluid angeordnet. Insbesondere begrenzt und/oder definiert die Abschirmeinheit zumindest einen Sensorraum, innerhalb welchem der Detektor der Sensoreinheit wenigstens zu einem Großteil angeordnet ist, wenigstens teilweise und insbesondere gemeinsam mit zumindest einer weiteren Baueinheit, wie beispielsweise einer Sensorgehäuseeinheit. Die Sensoreinheit weist insbesondere zumindest eine Sensorgehäuseeinheit auf, welche insbesondere zumindest einen Sensorraum wenigstens teilweise begrenzt und/oder definiert. Insbesondere definiert und/oder begrenzt die Sensorgehäuseeinheit den Sensorraum gemeinsam mit der Abschirmeinheit wenigstens im Wesentlichen und vorteilhaft vollständig. Beispielsweise könnte die Sensorgehäuseeinheit wenigstens zu einem Großteil aus zumindest einem Kunststoff und/oder aus zumindest einem Harz, insbesondere aus zumindest einem Epoxidharz, bestehen. Unter der Wendung, dass die Abschirmeinheit in wenigstens einem Betriebszustand den Detektor gegenüber in dem Lebensmittelaufnahmeraum befindlichem Fluid "wenigstens im Wesentlichen" abschirmt, soll insbesondere verstanden werden, dass die die Abschirmeinheit in wenigstens einem Betriebszustand den Detektor gegenüber in dem Lebensmittelaufnahmeraum befindlichem Fluid unter Zulassung von Dichtungstoleranzen und/oder von Fertigungstoleranzen abschirmt. Insbesondere könnte die Abschirmeinheit wenigstens zu einem Großteil aus zumindest einem Kunststoff und/oder aus zumindest einem Harz, insbesondere aus zumindest einem Epoxidharz, und/oder aus zumindest einem Elastomer, insbesondere aus zumindest einem Fluoroelastomer, bestehen. Dadurch kann insbesondere eine hohe Funktionstüchtigkeit gewährleistet und/oder eine Beschädigung des Detektors der Sensoreinheit vermieden werden, wodurch insbesondere eine langlebige Ausgestaltung erzielt werden kann.

Ferner wird vorgeschlagen, dass das Garsystem zumindest eine Kühlungseinheit aufweist, welche dazu vorgesehen ist, zumindest einen Teilbereich des Gargeschirrs und/oder des Lebensmittelaufnahmeraums, welcher insbesondere in wenigstens einem Betriebszustand in einem Nahbereich der Sensoreinheit angeordnet ist, zu kühlen. Die Kühlungseinheit könnte den Teilbereich beispielsweise aktiv kühlen, insbesondere durch Zufuhr von Kälte in den Teilbereich und/oder durch Abfuhr von Wärme aus dem Teilbereich. Zu der aktiven Kühlung des Teilbereichs könnte die Kühlungseinheit beispielsweise zumindest ein Wärmerohr und/oder zumindest ein Peltierelement aufweisen. Alternativ oder zusätzlich könnte die Kühlungseinheit den Teilbereich beispielsweise passiv kühlen. Insbesondere könnte das Gargeschirr in dem Teilbereich, welcher insbesondere durch die Kühlungseinheit definiert und/oder gebildet sein könnte, aus einem anderen Material ausgebildet sein als restliche Bereiche des Gargeschirrs. Insbesondere könnte das Material in dem Teilbereich eine Wärmeleitfähigkeit aufweisen, welche sich von einer Wärmeleitfähigkeit von Materialien restlicher Teilbereiche des Gargeschirrs unterscheiden könnte. Die Kühlungseinheit ist insbesondere dazu vorgesehen, in dem Teilbereich, welcher insbesondere von der Kühlungseinheit gekühlt ist, eine Bildung von Kondensat von in dem Lebensmittelaufnahmeraum befindlichem Fluid zu bewirken, um insbesondere die Sensoreinheit frei von Kondensat zu halten und/oder um insbesondere eine Bildung von Kondensat im Bereich der Sensoreinheit zu vermeiden. Dadurch können insbesondere optimierte Ergebnisse einer Detektion durch die Sensoreinheit erzielt werden, wodurch insbesondere eine effiziente und/oder langlebige und/oder leistungsfähige Ausgestaltung erzielt werden kann.

Die Steuereinheit könnte beispielsweise wenigstens teilweise als eine Mobilgeräte-Steuereinheit ausgebildet und insbesondere wenigstens teilweise, vorteilhaft wenigstens zu einem Großteil und besonders vorteilhaft vollständig in zumindest einem Mobilgerät integriert sein. Vorzugsweise ist die Steuereinheit wenigstens teilweise als eine Gargeräte-Steuereinheit ausgebildet und insbesondere wenigstens teilweise, vorteilhaft wenigstens zu einem Großteil und besonders vorteilhaft vollständig in zumindest einem Gargerät integriert. Insbesondere ist die Gargeräte-Steuereinheit wenigstens teilweise, insbesondere wenigstens zu einem Großteil und vorteilhaft vollständig in zumindest einer Steuereinheit eines Gargeräts integriert. Unter der Wendung, dass ein Objekt "wenigstens teilweise" als ein Gargeräte-Objekt ausgebildet ist, soll insbesondere verstanden werden, dass zumindest ein Teilobjekt des Objekts als Gargeräte-Teilobjekt ausgebildet ist und insbesondere in dem Gargeräte-Objekt integriert ist. Beispielsweise könnte zumindest ein weiteres Teilobjekt des Objekts als ein von einem Gargeräte-Objekt verschiedenes Geräte-Objekt ausgebildet sein, wie beispielsweise als ein Mobilgeräte-Objekt. Unter der Wendung, dass ein Objekt "als ein Gargeräte-Objekt ausgebildet" ist, soll insbesondere verstanden werden, dass das Objekt insbesondere wenigstens zu einem Großteil und vorteilhaft vollständig in zumindest einem Gargerät integriert ist. Dadurch kann insbesondere eine geringe Bauteilevielfalt und/oder eine geringe Lagerhaltung ermöglicht werden.

Besonders vorteilhaft weist das Garsystem zumindest zwei, insbesondere zumindest vier, vorteilhaft zumindest acht, besonders vorteilhaft zumindest zwölf und vorzugsweise eine Vielzahl an Heizeinheiten auf, welche insbesondere zu einer Beheizung des Gargeschirrs vorgesehen und vorteilhaft als Induktionsheizeinheiten ausgebildet sind. In wenigstens einem Betriebszustand bildet die Steuereinheit insbesondere aus den Heizeinheiten in Abhängigkeit einer Form und/oder Gestalt und/oder Größe des Gargeschirrs zumindest eine Heizzone zu einer Beheizung des Gargeschirrs aus, und zwar insbesondere in jedem Einzelfall und/oder für jedes neu aufgestellte Gargeschirr. Die Sensoreinheit ist insbesondere für Gargeschirre unterschiedlicher Form und/oder Gestalt und/oder Größe vorgesehen und insbesondere an Gargeschirren unterschiedlicher Form und/oder Gestalt und/oder Größe anordenbar. Insbesondere leitet die Steuereinheit in wenigstens einem Betriebszustand in Abhängigkeit von dem von der Sensoreinheit detektierten Druckparameter zumindest eine Betriebsoperation zumindest eines Garprozesses ein, und zwar insbesondere unabhängig von einer Form und/oder Gestalt und/oder Größe eines Gargeschirrs.

Ein besonders hoher Bedienkomfort kann insbesondere erreicht werden durch ein Gargerät, insbesondere durch ein Induktionsgargerät, mit zumindest einer Steuereinheit eines erfindungsgemäßen Garsystems, welche insbesondere wenigstens teilweise als eine Gargeräte-Steuereinheit ausgebildet ist.

Eine hohe Flexibilität kann insbesondere erzielt werden durch ein Gargeschirr mit zumindest einer Sensoreinheit eines erfindungsgemäßen Garsystems, und zwar insbesondere da das Gargeschirr zu einer Benutzung mit Gargeräten verschiedenen Typs und/oder mit Gargeräten, welche sich in zumindest einer Eigenschaft unterscheiden, vorgesehen ist.

Eine präzise Detektion des Druckparameters kann insbesondere ermöglicht werden durch eine Sensoreinheit eines erfindungsgemäßen Garsystems.

Ein besonders hoher Bedienkomfort kann insbesondere erreicht werden durch ein Verfahren zu einem Betrieb eines erfindungsgemäßen Garsystems, in welchem in wenigstens einem Betriebszustand zumindest ein Druckparameter, der einen Druck innerhalb zumindest eines Lebensmittelaufnahmeraums zumindest eines Gargeschirrs kennzeichnet, detektiert wird, wobei in Abhängigkeit von dem Druckparameter zumindest eine Betriebsoperation zumindest eines Garprozesses automatisch eingeleitet wird.

Das Garsystem soll hierbei nicht auf die oben beschriebene Anwendung und Ausführungsform beschränkt sein. Insbesondere kann das Garsystem zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Garsystem mit einem Gargerät und mit einem Gargeschirr in einer schematischen, stark vereinfachten Draufsicht,
- Fig. 2: einen Ausschnitt des Gargeschirrs, eine Sensoreinheit und eine Kühlungseinheit des Garsystems in einer schematischen Schnittdarstellung,
- Fig. 3: die Sensoreinheit in einer schematischen Darstellung und
- Fig. 4: ein Diagramm, in welchem ein Druck und eine Temperatur über der Zeit aufgetragen sind in einer schematischen Darstellung.

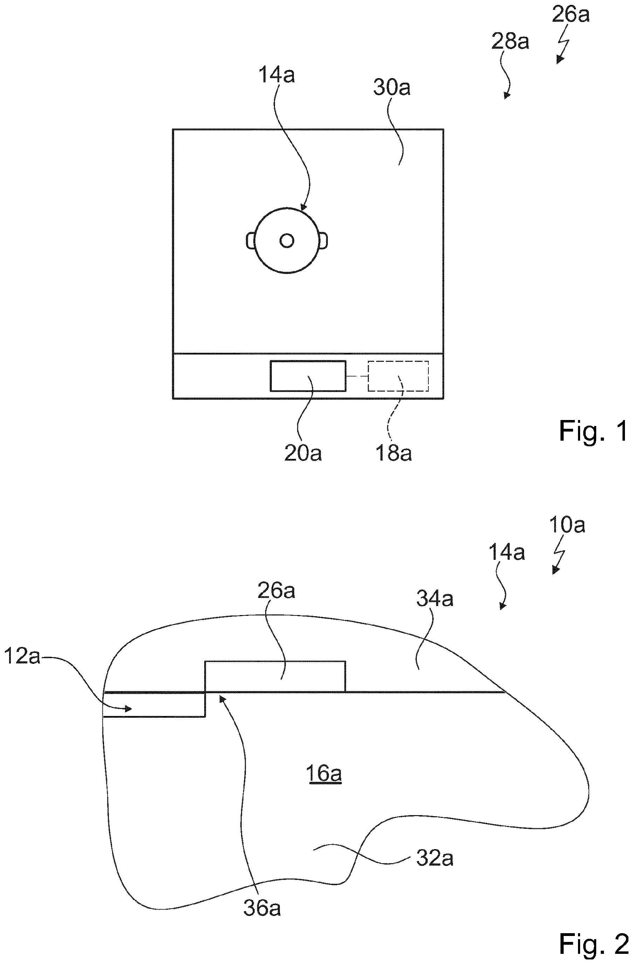

Figur 1 zeigt ein Gargerät 28a, welches als ein Induktionsgargerät ausgebildet ist. Das Gargerät 28a könnte beispielsweise als ein Induktionsofen ausgebildet sein. Im vorliegenden Ausführungsbeispiel ist das Gargerät 28a als ein Kochfeld 28a, und zwar insbesondere als ein Induktionskochfeld, ausgebildet.

Das Garsystem 10a weist eine Aufstellplatte 30a auf. In einem montierten Zustand bildet die Aufstellplatte 30a eine Sichtfläche aus, welche in einem montierten Zustand insbesondere einem Bediener zugewandt angeordnet ist. Die Aufstellplatte 30a ist zu einem Aufstellen von Gargeschirr 14a zum Zweck einer Beheizung des Gargeschirrs 14a vorgesehen. Im vorliegenden Ausführungsbeispiel ist die Aufstellplatte 30a als eine Kochfeldplatte ausgebildet.

Das Garsystem 10a weist das Gargeschirr 14a auf. Das Gargeschirr 14a ist zu einem Aufstellen auf der Aufstellplatte 30a zum Zweck einer Beheizung des Gargeschirrs 14a vorgesehen.

Das Garsystem 10a weist zumindest eine Heizeinheit auf (nicht dargestellt). Im vorliegenden Ausführungsbeispiel weist das Garsystem 10a eine Vielzahl an Heizeinheiten auf. Alternativ könnte das Garsystem 10a beispielsweise eine kleinere Anzahl an Heizeinheiten aufweisen, wie beispielsweise genau eine Heizeinheit und/oder zumindest zwei, insbesondere zumindest vier, vorteilhaft zumindest acht, besonders vorteilhaft zumindest zwölf und vorzugsweise mehrere Heizeinheiten. Die Heizeinheiten könnten beispielsweise in Form einer Matrix angeordnet sein. Im Folgenden wird lediglich eine der Heizeinheiten beschrieben.

Die Heizeinheit ist in einer Einbaulage unterhalb der Aufstellplatte 30a angeordnet. Die Heizeinheit ist dazu vorgesehen, zumindest ein auf der Aufstellplatte 30a oberhalb der Heizeinheit aufgestelltes Gargeschirr 14a zu erhitzen. Die Heizeinheit ist als Induktionsheizeinheit ausgebildet.

Das Garsystem 10a weist eine Bedienerschnittstelle 20a auf. Die Bedienerschnittstelle 20a ist zu einer Eingabe und/oder Auswahl von Betriebsparametern vorgesehen, wie beispielsweise einer Heizleistung und/oder einer Heizleistungsdichte und/oder einer Heizzone. Die Bedienerschnittstelle 20a ist zu einer Ausgabe eines Werts eines Betriebsparameters an einen Bediener vorgesehen.

Die Bedienerschnittstelle 20a ist teilweise, insbesondere zu einem Großteil und vorteilhaft vollständig in dem Gargerät 28a integriert. Die Bedienerschnittstelle 20a ist teilweise als eine Gargeräte-Bedienerschnittstelle ausgebildet. Die Bedienerschnittstelle 20a des Garsystems 10a ist im vorliegenden Ausführungsbeispiel Teil des Gargeräts 28a. Das Gargerät 28a weist die Bedienerschnittstelle 20a des Garsystems 10a auf.

Das Garsystem 10a weist eine Steuereinheit 18a auf. In dem Betriebszustand steuert und/oder regelt die Steuereinheit 18a eine Gargerätehauptfunktion. Die Steuereinheit 18a ist dazu vorgesehen, in Abhängigkeit von mittels der Bedienerschnittstelle 20a eingegebener Betriebsparameter, Aktionen auszuführen und/oder Einstellungen zu verändern. Die Steuereinheit 18a regelt in dem Betriebszustand eine Energiezufuhr zu der Heizeinheit.

Im vorliegenden Ausführungsbeispiel ist die Steuereinheit 18a teilweise, insbesondere zu einem Großteil und vorteilhaft vollständig als eine Gargeräte-Steuereinheit ausgebildet. Die Steuereinheit 18a des Garsystems 10a ist Teil des Gargeräts 28a. Das Gargerät 28a weist die Steuereinheit 18a des Garsystems 10a auf.

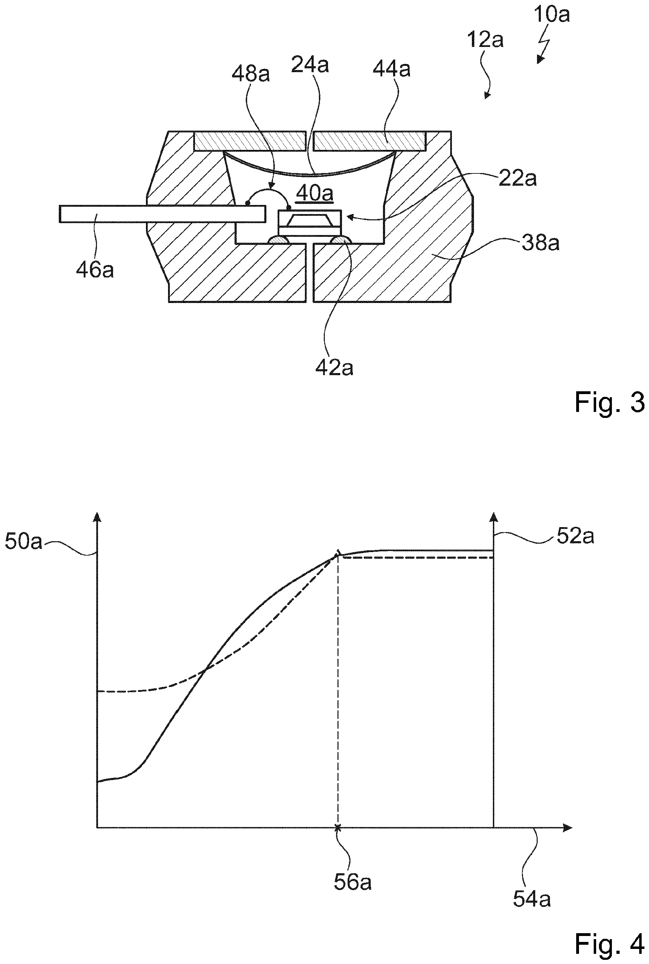

Das Garsystem 10a weist eine Sensoreinheit 12a auf (vgl. Figuren 2 und 3). Die Sensoreinheit 12a ist speziell für das Garsystem 10a vorgesehen und ausgebildet. In einem Betriebszustand ist die Sensoreinheit 12a zu einem Großteil und vorteilhaft vollständig in dem Gargeschirr 14a integriert. Die Sensoreinheit 12a ist Teil des Gargeschirrs 14a. Das Gargeschirr 14a weist die Sensoreinheit 12a des Garsystems 10a auf.

Die Sensoreinheit 12a ist in einem Betriebszustand zu einem Großteil und vorteilhaft vollständig innerhalb des Gargeschirrs 14a, und zwar insbesondere innerhalb eines Lebensmittelaufnahmeraums 16a des Gargeschirrs 14a, angeordnet. Die Sensoreinheit 12a ist zu einer Detektion zumindest eines Druckparameters vorgesehen. In einem Betriebszustand detektiert die Sensoreinheit 12a zumindest einen Druckparameter. Der Druckparameter kennzeichnet einen Druck innerhalb des Lebensmittelaufnahmeraums 16a des Gargeschirrs 14a.

Das Gargeschirr 14a definiert den Lebensmittelaufnahmeraum 16a. Das Gargeschirr 14a weist einen Gargeschirrgrundkörper 32a auf. Der Gargeschirrgrundkörper 32a definiert den Lebensmittelaufnahmeraum 16a zu einem Großteil. In einem Betriebszustand definiert der Gargeschirrgrundkörper 32a den Lebensmittelaufnahmeraum 16a gemeinsam mit einem Gargeschirrdeckel 34a.

Das Gargeschirr 14a weist den Gargeschirrdeckel 34a auf. In einem Betriebszustand liegt der Gargeschirrdeckel 34a auf dem Gargeschirrgrundkörper 32a auf. Der Gargeschirrgrundkörper 32a und der Gargeschirrdeckel 34a sind in einem Betriebszustand über eine Dichtung (nicht dargestellt) miteinander verbunden. In einem Betriebszustand verschließen der Gargeschirrgrundkörper 32a und der Gargeschirrdeckel 34a den Lebensmittelaufnahmeraum 16a im Wesentlichen druckdicht.

Die Sensoreinheit 12a ist in einem Betriebszustand zu einem Großteil und vorteilhaft vollständig innerhalb des Lebensmittelaufnahmeraums 16a des Gargeschirrs 14a angeordnet. In einem Betriebszustand ist die Sensoreinheit 12a an einer Wandung des Gargeschirrgrundkörpers 32a und/oder des Gargeschirrdeckels 34a angeordnet. In einem Betriebszustand detektiert die Sensoreinheit 12a den Druckparameter, der einen Druck innerhalb des Lebensmittelaufnahmeraums 16a des Gargeschirrs 14a kennzeichnet.

Die Steuereinheit 18a leitet in einem Betriebszustand in Abhängigkeit von dem Druckparameter zumindest eine Betriebsoperation zumindest eines Garprozesses ein. In einem Betriebszustand ist die Steuereinheit 18a dazu vorgesehen, in Abhängigkeit von dem Druckparameter zumindest eine Betriebsoperation zumindest eines Garprozesses einzuleiten.

In einem Betriebszustand vergleicht die Steuereinheit 18a den Druckparameter mit einem Druckreferenzbereich. In einem Betriebszustand erkennt die Steuereinheit 18a durch Vergleich des Druckparameters mit dem Druckreferenzbereich ein Erreichen eines Maximaldrucks innerhalb des Lebensmittelaufnahmeraums 16a.

In Abhängigkeit von dem Druckparameter leitet die Steuereinheit 18a in einem Betriebszustand bei Erreichen des Maximaldrucks innerhalb des Lebensmittelaufnahmeraums 16a zumindest eine Sicherheitsaktion ein. Im vorliegenden Ausführungsbeispiel deaktiviert die Steuereinheit 18a bei Erreichen des Maximaldrucks innerhalb des Lebensmittelaufnahmeraums 16a das Gargeschirr 14a beheizende Heizeinheiten. Eine Sicherheitsaktion ist eine Deaktivierung von das Gargeschirr 14a beheizenden Heizeinheiten.

In einem Betriebszustand vergleicht die Steuereinheit 18a den Druckparameter mit einem Druckreferenzbereich, welcher insbesondere in einem insbesondere automatischen Garprozess vorgegeben ist. In einem Betriebszustand erkennt die Steuereinheit 18a durch Vergleich des Druckparameters mit dem Druckreferenzbereich, ob der Druckparameter einen Wert innerhalb des Druckreferenzbereichs annimmt. Im Fall eines Druckparameters, welcher einen Wert innerhalb des in dem Garprozess vorgegebenen Druckreferenzbereichs annimmt, reduziert die Steuereinheit 18a eine zu einer Beheizung des Gargeschirrs 14a bereitgestellte Heizleistung automatisch.

Die Steuereinheit 18a vermeidet in dem Betriebszustand im Fall eines Druckparameters, welcher einen Wert innerhalb des in dem Garprozess vorgegebenen Druckreferenzbereichs annimmt, eine Deaktivierung von das Gargeschirr 14a beheizenden Heizeinheiten. Durch Reduzierung der zu einer Beheizung des Gargeschirrs 14a bereitgestellten Heizleistung hält die Steuereinheit 18a in einem Betriebszustand den Druckparameter und/oder eine Temperatur des Gargeschirrs im Wesentlichen konstant, und zwar insbesondere auf energiesparende und/oder umweltfreundliche Weise.

Die Steuereinheit 18a überprüft in einem Betriebszustand in Abhängigkeit von dem Druckparameter zumindest einen Dichtungsparameter des Gargeschirrs 14a. In Abhängigkeit von dem Dichtungsparameter erkennt die Steuereinheit 18a in einem Betriebszustand eine Fehlpositionierung des Gargeschirrdeckels 34a relativ zu dem Gargeschirrgrundkörper 32a und/oder eine Undichtigkeit in der Dichtung zwischen dem Gargeschirrdeckel 34a und dem Gargeschirrgrundkörper 32a.

Im Fall einer Abweichung des Dichtungsparameters von einem Dichtungsreferenzbereich leitet die Steuereinheit 18a in einem Betriebszustand zumindest eine Sicherheitsaktion ein. Im vorliegenden Ausführungsbeispiel gibt die Steuereinheit 18a im Fall einer Abweichung des Dichtungsparameters von einem Dichtungsreferenzbereich eine Warnung an einen Bediener aus, und zwar insbesondere mittels der Bedienerschnittstelle 20a. Eine Sicherheitsaktion ist eine Ausgabe einer Warnung an einen Bediener.

In einem Betriebszustand gibt die Steuereinheit 18a, insbesondere unabhängig von einer Warnung an einen Bediener und vorteilhaft während des gesamten Garprozesses und/oder in regelmäßigen Abständen während des Garprozesses, über die Bedienerschnittstelle 20a zumindest eine den Druckparameter kennzeichnende Kenngröße aus. Im vorliegenden Ausführungsbeispiel gibt die Steuereinheit 18a in einem Betriebszustand über die Bedienerschnittstelle 20a einen in dem Lebensmittelaufnahmeraum 16a herrschenden Druck aus. Die den Druckparameter kennzeichnende Kenngröße ist als Druck innerhalb des Lebensmittelaufnahmeraums 16a des Gargeschirrs 14a ausgebildet.

Im vorliegenden Ausführungsbeispiel ist die Sensoreinheit 12a an einer Wandung des Gargeschirrs 14a angeordnet. Die Sensoreinheit 12a ist an der Wandung des Gargeschirrs 14a befestigt. Zu einer Kühlung eines die Sensoreinheit 12a umgebenden Nahbereichs 36a der Sensoreinheit 12a weist das Garsystem 10a eine Kühlungseinheit 26a auf. Die Kühlungseinheit 26a ist dazu vorgesehen, zumindest einen Teilbereich des Gargeschirrs 14a und/oder des Lebensmittelaufnahmeraums 16a zu kühlen. In einem Betriebszustand kühlt die Kühlungseinheit 26a einen Teilbereich des Gargeschirrs 14a und/oder des Lebensmittelaufnahmeraums 16a, der in einem Betriebszustand in einem Nahbereich 36a der Sensoreinheit 12a angeordnet ist.

Durch Kühlung des Teilbereich des Gargeschirrs 14a und/oder des Lebensmittelaufnahmeraums 16a bewirkt die Kühlungseinheit 26a in einem Betriebszustand in dem Teilbereich eine Bildung von Kondensat von in dem Lebensmittelaufnahmeraum 16a befindlichem Fluid, um insbesondere die Sensoreinheit 12a frei von Kondensat zu halten und/oder um insbesondere eine Bildung von Kondensat im Bereich der Sensoreinheit 12a zu vermeiden.

Im vorliegenden Ausführungsbeispiel besteht das Gargeschirr 14a in dem Teilbereich des Gargeschirrs 14 aus einem Material mit einer Wärmeleitfähigkeit, welche sich von einer Wärmeleitfähigkeit von Materialien unterscheidet, aus welchen restliche Bereiche des Gargeschirrs 14a ausgebildet sind.

Die Sensoreinheit 12a weist eine Sensorgehäuseeinheit 38a auf (vgl. Figur 3). Die Sensorgehäuseeinheit 38a definiert und/oder begrenzt einen Sensorraum 40a teilweise und vorteilhaft zu einem Großteil. Im vorliegenden Ausführungsbeispiel besteht die Sensorgehäuseeinheit 38a zu einem Großteil aus einem Epoxidharz.

Die Sensoreinheit 12a weist einen Detektor 22a auf. In einem Betriebszustand detektiert der Detektor 22a den Druckparameter. In einem Betriebszustand ist der Detektor 22a durch eine Ausnehmung der Sensorgehäuseeinheit 38a hindurch fluidtechnisch mit dem Lebensmittelaufnahmeraum 16a verbunden. Aufgrund der Ausnehmung der Sensorgehäuseeinheit 38a ist ein Druck innerhalb des Sensorraums 40a mit einem Druck innerhalb des Lebensmittelaufnahmeraums 16a korreliert und/oder von einem Druck innerhalb des Lebensmittelaufnahmeraums 16a abhängig.

In einem Betriebszustand ist der Detektor 22a mit der Sensorgehäuseeinheit 38a verbunden. Die Sensoreinheit 12a weist ein Verbindungsmittel 42a auf. Das Verbindungsmittel 42a verbindet in einem Betriebszustand den Detektor 22a mit der Sensorgehäuseeinheit 38a. Im vorliegenden Ausführungsbeispiel besteht das Verbindungsmittel 42a zu einem Großteil aus Silikonkautschuk und/oder aus Silikonelastomere und/oder aus RTV Silikon.

Die Sensoreinheit 12a weist einen Sensorverschluss 44a auf. Der Sensorverschluss 44a ist in einem Betriebszustand mit der Sensorgehäuseeinheit 38a verbunden. In einem Betriebszustand definiert der Sensorverschluss 44a gemeinsam mit der Sensorgehäuseeinheit 38a den Sensorraum 40a im Wesentlichen. Im vorliegenden Ausführungsbeispiel besteht der Sensorverschluss 44a zu einem Großteil aus Stahl und/oder aus rostfreiem Stahl.

Die Sensoreinheit 12a weist eine Abschirmeinheit 24a auf. In einem Betriebszustand schirmt die Abschirmeinheit 24a den Detektor 22a gegenüber in dem Lebensmittelaufnahmeraum 16a befindlichem Fluid im Wesentlichen ab. Die Abschirmeinheit 24a ist in einem Betriebszustand zu einem Großteil innerhalb des Sensorraums 40a angeordnet.

Die Sensoreinheit 12a weist eine Sensorleiterplatine 46a auf. Die Sensorleiterplatine 46a ist zu einer Kontaktierung und/oder zu einer Kommunikation mit der Steuereinheit 18a vorgesehen. Beispielsweise könnte die Sensoreinheit 12a eine Kommunikationseinheit (nicht dargestellt) aufweisen, welche insbesondere an der Sensorleiterplatine 46a angeordnet sein könnte.

Die Sensorleiterplatine 46a greift in einem Betriebszustand durch die Sensorgehäuseeinheit 38a hindurch. In einem Betriebszustand ist die Sensorleiterplatine 46a elektrisch mit dem Detektor 22a mittels eines Kontaktierungselements 48a verbunden. Im vorliegenden Ausführungsbeispiel ist das Kontaktierungselements 48a durch Drahtbonden hergestellt.

In einem Verfahren zu einem Betrieb des Garsystems 10a wird in welchem in einem Betriebszustand ein Druckparameter, der einen Druck innerhalb des Lebensmittelaufnahmeraums 16a des Gargeschirrs 14a kennzeichnet, detektiert, und zwar insbesondere mittels der Sensoreinheit 12a. In Abhängigkeit von dem Druckparameter wird in einem Betriebszustand zumindest eine Betriebsoperation zumindest eines Garprozesses automatisch eingeleitet.

Figur 4 zeigt ein Diagramm, in welchem ein Druck innerhalb des Gargeschirrs 14a und eine Temperatur eines in dem Gargeschirr 14a befindlichen Garguts über der Zeit aufgetragen sind. Auf einer linken Ordinatenachse 50a ist ein Druck innerhalb des Gargeschirrs 14a aufgetragen. Auf einer rechten Ordinatenachse 52a ist eine Temperatur eines in dem Gargeschirr 14a befindlichen Garguts aufgetragen. Auf einer Abszissenachse 54a ist eine Zeit aufgetragen. Im vorliegenden Ausführungsbeispiel sei angenommen, dass es sich bei dem in dem Gargeschirr 14a befindlichen Gargut um Wasser handelt.

Aus Figur 4 kann entnommen werden, dass in dem Gargeschirr 14a befindliches Gargut ab einer Temperatur von im Wesentlichen 70 °C Dampf bildet und insbesondere verdampft, wodurch insbesondere ein Druck innerhalb des Gargeschirrs 14a ansteigt. Der Druck innerhalb des Gargeschirrs 14a steigt bis zu einem Maximalwert 56a an. Im vorliegenden Ausführungsbeispiel reduziert die Steuereinheit 18a eine dem Gargeschirr 14a zugeführte Heizleistung bei Erreichen des Maximalwerts 56a des Drucks innerhalb des Gargeschirrs 14a.

### Bezugszeichen

- 10: Garsystem
- 12: Sensoreinheit
- 14: Gargeschirr
- 16: Lebensmittelaufnahmeraum
- 18: Steuereinheit
- 20: Bedienerschnittstelle
- 22: Detektor
- 24: Abschirmeinheit
- 26: Kühlungseinheit
- 28: Gargerät
- 30: Aufstellplatte
- 32: Gargeschirrgrundkörper
- 34: Gargeschirrdeckel
- 36: Nahbereich
- 38: Sensorgehäuseeinheit
- 40: Sensorraum
- 42: Verbindungsmittel
- 44: Sensorverschluss
- 46: Sensorleiterplatine
- 48: Kontaktierungselement
- 50: Ordinatenachse
- 52: Ordinatenachse
- 54: Abszissenachse
- 56: Maximalwert

## Patentansprüche

1. Garsystem, insbesondere Induktionsgarsystem, mit zumindest einer Sensoreinheit (12a), welche zu einer Detektion zumindest eines Druckparameters vorgesehen ist, der einen Druck innerhalb zumindest eines Lebensmittelaufnahmeraums (16a) zumindest eines Gargeschirrs (14a) kennzeichnet, **gekennzeichnet durch** zumindest eine Steuereinheit (18a), welche dazu vorgesehen ist, in Abhängigkeit von dem Druckparameter zumindest eine Betriebsoperation zumindest eines Garprozesses einzuleiten.

2. Garsystem nach Anspruch 1, **dadurch gekennzeichnet, dass** die Steuereinheit (18a) in wenigstens einem Betriebszustand in Abhängigkeit von dem Druckparameter ein Erreichen eines Maximaldrucks innerhalb des Lebensmittelaufnahmeraums (16a) erkennt und bei Erreichen des Maximaldrucks zumindest eine Sicherheitsaktion einleitet.

3. Garsystem nach Anspruch 1 oder 2, **dadurch gekennzeichnet, dass** die Steuereinheit (18a) in wenigstens einem Betriebszustand in Abhängigkeit von dem Druckparameter zumindest einen Dichtungsparameter des Gargeschirrs (14a) überprüft und im Fall einer Abweichung des Dichtungsparameters von einem Dichtungsreferenzbereich zumindest eine Sicherheitsaktion einleitet.

4. Garsystem nach einem der vorhergehenden Ansprüche, **dadurch gekennzeichnet, dass** die Steuereinheit (18a) in wenigstens einem Betriebszustand im Fall eines Druckparameters, welcher einen Wert innerhalb zumindest eines in dem Garprozess vorgegebenen Druckreferenzbereichs annimmt, zumindest eine zu einer Beheizung des Gargeschirrs (14a) bereitgestellte Heizleistung automatisch zumindest reduziert.

5. Garsystem nach einem der vorhergehenden Ansprüche, **gekennzeichnet durch** zumindest eine Bedienerschnittstelle (20a), über welche die Steuereinheit (18a) in wenigstens einem Betriebszustand zumindest eine den Druckparameter kennzeichnende Kenngröße ausgibt.

6. Garsystem nach einem der vorhergehenden Ansprüche, **dadurch gekennzeichnet, dass** die Sensoreinheit (12a) in wenigstens einem Betriebszustand wenigstens zu einem Großteil innerhalb des Gargeschirrs (14a) angeordnet ist.

7. Garsystem nach Anspruch 6, **dadurch gekennzeichnet, dass** die Sensoreinheit (12a) zumindest einen Detektor (22a) und zumindest eine Abschirmeinheit (24a) aufweist, die in wenigstens einem Betriebszustand den Detektor (22a) gegenüber in dem Lebensmittelaufnahmeraum (14a) befindlichem Fluid wenigstens im Wesentlichen abschirmt.

8. Garsystem nach einem der vorhergehenden Ansprüche, **gekennzeichnet durch** zumindest eine Kühlungseinheit (26a), welche dazu vorgesehen ist, zumindest einen Teilbereich des Gargeschirrs (14a) und/oder des Lebensmittelaufnahmeraums (16a) zu kühlen.

9. Garsystem nach einem der vorhergehenden Ansprüche, **dadurch gekennzeichnet, dass** die Steuereinheit (18a) wenigstens teilweise als eine Gargeräte-Steuereinheit ausgebildet ist.

10. Gargerät, insbesondere Induktionsgargerät, mit zumindest einer Steuereinheit (18a) eines Garsystems (10a) zumindest nach Anspruch 9.

11. Gargeschirr mit zumindest einer Sensoreinheit (12a) eines Garsystems (10a) nach einem der Ansprüche 1 bis 9.

12. Sensoreinheit eines Garsystems (10a) nach einem der Ansprüche 1 bis 9.

13. Verfahren zu einem Betrieb eines Garsystems (10a), insbesondere nach einem der Ansprüche 1 bis 9, in welchem in wenigstens einem Betriebszustand zumindest ein Druckparameter, der einen Druck innerhalb zumindest eines Lebensmittelaufnahmeraums (16a) zumindest eines Gargeschirrs (14a) kennzeichnet, detektiert wird, **dadurch gekennzeichnet, dass** in Abhängigkeit von dem Druckparameter zumindest eine Betriebsoperation zumindest eines Garprozesses automatisch eingeleitet wird.
